# EUROPÄISCHE PATENTSCHRIFT

(11) **EP 0 481 227 B1**
(45) Veröffentlichungstag und Bekanntmachung des Hinweises auf die Patenterteilung: **16.03.1994**
(21) Anmeldenummer: 91115712.1
(22) Anmeldetag: 17.09.1991
(51) Int. Cl.: B60T 8/34, B60T 8/88

(54) **Zwei-Kreis-Bremsanlage für Kraftfahrzeuge**
Double circuit brake system for vehicles
Système de freinage à double circuit pour véhicules

(30) Priorität: 16.10.1990 DE 4032825
(43) Veröffentlichungstag der Anmeldung: 22.04.1992
(73) Patentinhaber: MAN Nutzfahrzeuge Aktiengesellschaft, 80976 München (DE)
(72) Erfinder: Wille, Hans Günter, W-8039 Puchheim (DE); Kirchmeier, Klaus, W-8045 Ismaning (DE)

(56) Entgegenhaltungen:
- FR-A- 2 605 958
- GB-A- 2 091 829
- GB-A- 2 113 333
- GB-A- 2 169 975

## Beschreibung

Die Erfindung betrifft eine pneumatische oder hydraulische Zwei-Kreis-Bremsanlage für die Räder einer Achse eines Lastkraftwagens, Omnibusses oder dergleichen Fahrzeugs, mit Merkmalen entsprechend dem Oberbegriff des Anspruches 1.

Eine derartige Zwei-Kreis-Bremsanlage ist aus der GB-A-2 113 333 bekannt. Dabei sind jedem Rad der betrachteten Achse zwei Bremszylinder zugeordnet, wobei die jeweils einen in einen ersten Bremskreis und die jeweils andern in einen zweiten Bremskreis eingeschaltet sind. Auf diese Weise ist eine blockiergeschützte Bremsung möglich.

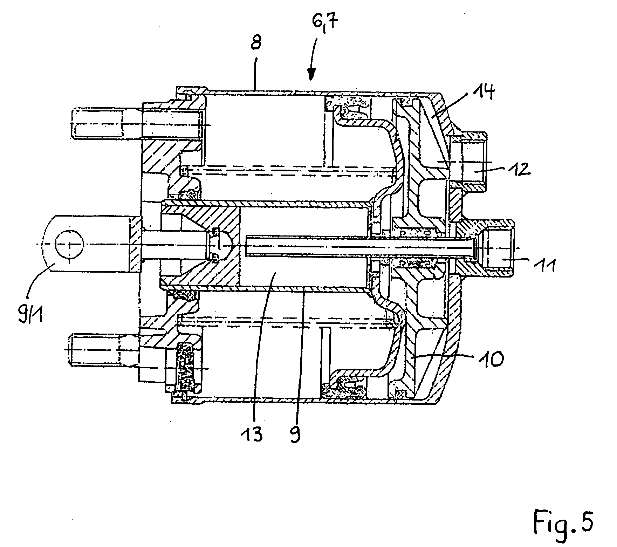

Darüber hinaus ist es aber auch schon bekannt, in einem herkömmlichen Zwei-Kreis-Bremssystem (ohne Blockierschutz) Doppelkolben-Bremszylinder, z.B. der aus Fig. 5 ersichtlichen Bauart, für die Bremsung der Räder einer Achse zu verwenden. Jedoch ist es bisher nicht möglich gewesen, mit einer solchermaßen ausgestatteten Bremsanlage ein Antiblockiersystem zu verknüpfen.

Demzufolge ist es Aufgabe der Erfindung, für Lastwagen, Omnibusse oder dergleichen Fahrzeuge, bei denen für die Bremsung jedes Rades einer Achse ein Doppelkolben-Bremszylinder vorgesehen ist, die Zwei-Kreis-Bremsanlage so auszubilden, daß einerseits eine antiblockiergeschützte Bremsung, andererseits bei Ausfall von den Antiblockierschutz bewirkenden Teilen der Bremsanlage trotzdem eine Bremsung des Fahrzeuges über die Räder dieser Achse möglich ist.

Diese Aufgabe wird erfindungsgemäß durch eine Zwei-Kreis-Bremsanlage mit Merkmalen entsprechend dem Kennzeichen des Anspruchs 1 gelöst.

Dabei sieht die erfindungsgemäße Bremsanlage eine mikroprozessorgesteuerte ABS-Regel- und Steuerelektronik zur Ausgabe von Steuerbefehlen an zwei - je Achsseite einen - ABS-Druckmodulatoren vor, die beide in einen ersten Bremskreis eingeschaltet sind und im Fall einer Bremsung jeweils das zugeführte Druckmittel über abgehende Bremsleitungen den beiden Druckräumen eines Doppelkolben-Bremszylinders je Achsseite im Sinne einer antiblockiergeschützten Bremsung der beiden Räder zuleiten, wobei in jede der zum einen Druckraum des linken und rechten Doppelkolben-Bremszylinders führenden Bremsleitungen je ein 3/2-Wege-Umschaltventil eingebaut ist, die beide im Fall einer Bremsung auf Durchlaß geschaltet, jedoch bei Ausfall bzw. Störungen des ersten Bremskreises automatisch auf einen angeschlossenen zweiten Bremskreis umschaltbar sind, über den das Druckmittel dann druckdosiertden besagten einen Druckräumen der beiden Doppelkolben-Bremszylinder für eine normale, nicht antiblockiergeschützte Bremsung der Räder bereitstellbar ist.

Vorteilhafte Ausgestaltungen und Einzelheiten dieser erfindungsgemäßen Lösung sind in den Unteransprüchen angegeben.

Nachstehend ist die erfindungsgemäße Lösung anhand mehrerer in der Zeichnung dargestellter Ausführungsbeispiele noch näher erläutert. In der Zeichnung zeigen :
- Fig. 1 und 2: je eine im Detail unterschiedliche Bremsanlage für die Bremsung der beiden Räder einer Achse,
- Fig. 3: eine Modifikation der Ausführungsform gemäß Fig. 1,
- Fig. 4: eine Modifikation der Ausführungsform gemäß Fig. 2, und
- Fig. 5: eine bekannte Ausführungsform eines Doppelkolben-Bremszylinders.

In den Figuren sind des besseren Verständnisses wegen gleiche bzw. einander entsprechende Teile mit gleichen Bezugszeichen angezogen.

In der Zeichnung ist eine Achse 1 eines Lastkraftwagens, Omnibusses oder dergleichen Fahrzeug mit ihren beiden Rädern 2,3 und jeweils zugehörigen Bremsmechanismen 4,5 schematisiert dargestellt. Jeder dieser üblichen, seinem Aufbau nach an sich bekannten Bremsmechanismen ist überein Gestänge von einem zugehörigen Doppelkolben-Bremszylinder 6, 7 aus für eine Bremsung des jeweiligen Rades 2, 3 betätigbar, wobei die Bremskraft über pneumatisches oder hydraulisches Druckmittel alternativ - wie nachfolgend beschrieben - aus einem von zwei entsprechend ausgelegten Bremskreisen B1, B2 bereitstellbar ist.

Als Doppelkolben-Bremszylinder 6, 7 kommen beispielsweise solche bekannter Bauart - wie aus Fig. 5 ersichtlich - zur Anwendung, wobei nachstehend nur kurz auf deren wesentliche Bestandteile eingegangen ist. Im Gehäuse 8 sind zwei koaxial hintereinander angeordnete, axial verschiebbare Kolben 9, 10 gegeben, denen zu ihrer Betätigung jeweils ein mit einem Druckmittelanschluß 11, 12 kommunizierender Druckraum 13, 14 zugeordnet ist. Jeder Doppelkolben-Bremszylinder 6, 7 ist im Bereich des jeweiligen Rades 2 bzw. 3 lagefest am Fahrzeugrahmen befestigt. Der Kolben 9 weist eine aus dem Gehäuse 8 herausragende Kolbenstange 9/1 auf, an dem das zum jeweiligen Bremsmechanismus 4 bzw. 5 eines Rades 2 bzw. 3 führende Gestänge angelenkt ist.

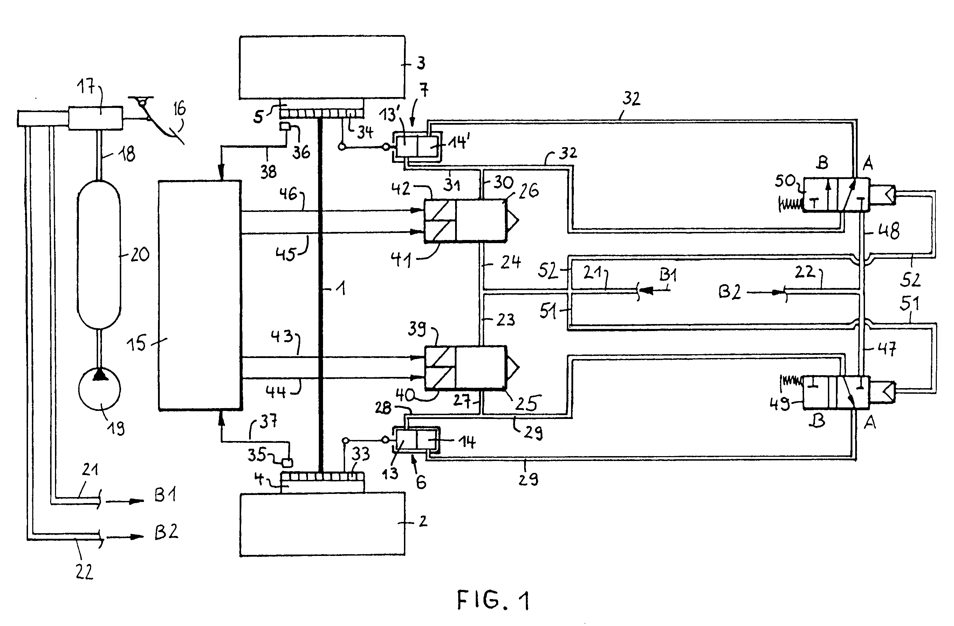

Der Übersichtlichkeit wegen sind in den Figuren 1 bis 4, obgleich Identität zwischenden beiden Doppelkolben-Bremszylindern 6, 7 besteht, die Druckräume des Doppelkolben-Bremszylinders 6 mit 13, 14, die Druckräume des Doppelkolben-Bremszylinders 7 dagegen mit 13' und 14' angegeben.

Mit 15 ist eine mikroprozessorgesteuerte ABS-Regel- und Steuerelektronik bezeichnet, die im dargestellten Fall dem Prinzip einer 4-Kanal-Steuerung gehorcht und den für Antiblockierschutz (ABS)-Systeme üblichen Aufbau sowie eine bekannte Funktion hat. Mit 16 ist das Betriebsbremspedal des Fahrzeuges bezeichnet, das für eine Bremsung vom Fahrer betätigt auf ein Betriebsbremsventil 17 wirkt. Dieses ist über eine Zuleitung 18 an einem von einem Kompressor 19 ladbaren Druckluftvorrat 20 angeschlossen und bewirkt im Fall einer Bremsung ein in Abhängigkeit von der Betriebsbremspedalbetätigung druckdosierte Zuleitung des Druckmittels- im dargestellten Beispiel Druckluft - in die beiden ausgangsseitig angeschlossenen Bremskreise B1, B2. Der erste Bremskreis B1 beginnt mit Druckleitung 21, der zweite Bremskreis B2 beginnt mit Druckleitung 22.

Im ersten Bremskreis B1 wird im Fall einer Bremsung das druckdosiert bereitgestellte Druckmittel überzwei von der Druckleitung 21 abzweigende Zuleitungen 23, 24 zu zwei ABS-Druckmodulatoren 25, 26 und über diese sowie jeweils davon abgehende Bremsleitungen 27, 28, 29 bzw. 30, 31, 32 zu den beiden Druckräumen 13, 14 bzw. 13', 14' jedes der beiden Doppelkolben-Bremszylinder 6, 7 geleitet. Dabei ist der ABS-Druckmodulator 25, von dem die Bremsleitung 27 abgeht und an welche einerseits die zum Druckraum 13 führende Bremsleitung 28 und andererseits die zum Druckraum 14 des Doppelkolben-Bremszylinders 6 führende Bremsleitung 29 angeschlossen ist, mithin dem Bremsmechanismus 4 des linken Rades 2 der Achse 1 zugeordnet. Der andere ABS-Druckmodulator 26 dagegen, von dem die Bremsleitung 30 abgeht und an welche einerseits die zum Druckraum 13' führende Bremsleitung 31 und andererseits die zum Druckraum 14' des Doppelkolben-Bremszylinders 7 führende Bremsleitung 32 angeschlossen ist, ist mithin dem Bremsmechanismus 5 des rechten Rades 3 der Achse 1 zugeordnet.

Beide ABS-Druckmodulatoren 25, 26 lassen bei einer Bremsung das im ersten Bremskreis B1 bereitgestellte Druckmittel druckhaltend dann ungehindert hindurch, wenn keine Gefahr des Blockierens der beiden Räder 2, 3 besteht. Erst wenn diese Gefahr des Blockierens entsteht, was durch eine entsprechende Sensorik an der Achse 1 durch mit Rad 2 und Rad 3 mitrotierende Impulsgeber 33, 34 sowie je zugehörige Pulsaufnehmer 35, 36 erfaßt und über Signalleitungen 37, 38 der ABS-Regel- und Steuerelektronik 15 gemeldet wird, wird die Antiblockierschutzfunktion ausgelöst. Entsprechend dem dargestellten 4-Kanal-ABS-Steuerprinzip erhalten dabei die beiden Magnetventile 39, 40 bzw. 41, 42 je ABS-Druckmodulator 25, 26 von der ABS-Regel- und Steuerelektronik 15 entsprechende Schaltbefehle über vier elektrische Steuerkanäle 43, 44, 45, 46 zugeführt, mit der Folge, daß der Durchlaß des im ersten Bremskreis B1 bereitgestellten Druckmittels durch die beiden ABS-Druckmodulatoren 25, 26 im Sinne einer antiblockiergeschützten Abbremsung der Räder 2, 3 moduliert wird. Grundsätzlich bewirkt eine Druckmittelzufuhr zum Druckraum 13 bzw. 13' - über Druckleitung 28 bzw. 31 - eine Verschiebung des zugehörigen Kolbens 9 im Sinne einer Bremsenbetätigung und eine Druckmittelzufuhr zum Druckraum 14 bzw. 14' - über Druckleitung 29 bzw. 32 - eine Verschiebung des zugehörigen Kolbens 10 im Sinne einer unterstützenden Bremsenbetätigung.

Um der Gefahr vorzubeugen, daß bei Ausfall oder Störungen des ersten Bremskreises B1, hervorgerufen z.B. durch Druckabfall verursachende Leckagen in den Leitungswegen 21, 23, 24, eine Bremsung des Fahrzeugs überdie Räder 2, 3 der Achse 1 nicht mehr möglich wäre, sind der zweite Bremskreis B2 und zwei 3/2-Wege-Umschaltventile 49, 50 vorgesehen, von denen jedes über eine Zweigetung 47 bzw. 48 an der Druckleitung 22 des Bremskreises B2 angeschlossen sowie in die zum einen Druckraum-wie dargestellt- 14 bzw. 14' (oder wie auch möglich 13 bzw. 13') des linken bzw. rechten Doppelkolben-Bremszylinders 6, 7 führende Bremsleitung 29 bzw. 32 (oder 28 bzw. 31) eingebaut ist. Wenn der erste Bremskreis B1 intakt ist, befinden sich die beiden 3/2-Wege-Umschaltventile 49, 50 jeweils in Schaltstellung A, in der im dargestellten Fall die jeweilige Bremsleitung 29 bzw. 32 auf Durchlaß geschaltet, dagegen der Durchlaß von Druckmittel aus dem zweiten Bremskreis B2 unterbunden ist. Das heißt, bei intaktem ersten Bremskreis B1 erfolgt die Bremsung der Räder 2, 3 der Achse 1 auf die wie vorstehend beschriebene Weise. Im selben Moment jedoch, wo eine Störung im ersten Bremskreis B1 auftritt oder dieser ganz ausfällt, werden die beiden 3/2-Wege-Umschaltventile 49, 50 automatisch in ihre andere Schaltstellung B geschaltet, in der dann den besagten Druckräumen 14, 14' der beiden Doppelkolben-Bremszylinder 6, 7 das im zweiten Bremskreis B2 bereitgestellte Druckmittel im Sinne einer normalen, d.h. nicht antiblockiergeschützten Bremsung der Räder 2, 3 der Achse 1 entsprechend der Betätigung des Betriebsbremspedals 16 druckdosiert zuführbar ist.

Dabei bewirkt eine Druckmittelzuführung zum Druckraum 14, 14' eine Verschiebung des zugehörigen Kolbens 10 unter Mitnahme des jeweils nachgeschalteten Kolbens 9 in Richtung Bremskrafterzeugung.

Auf diese Weise ist es somit möglich, das Fahrzeug auch bei Ausfall des ersten Bremskreises B1 trotzdem sicher abzubremsen.

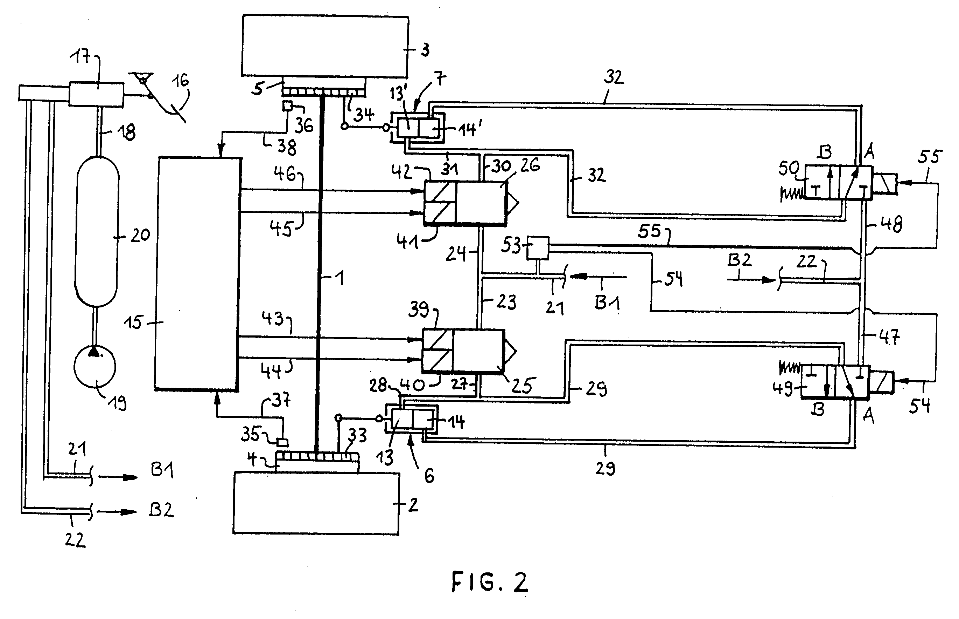

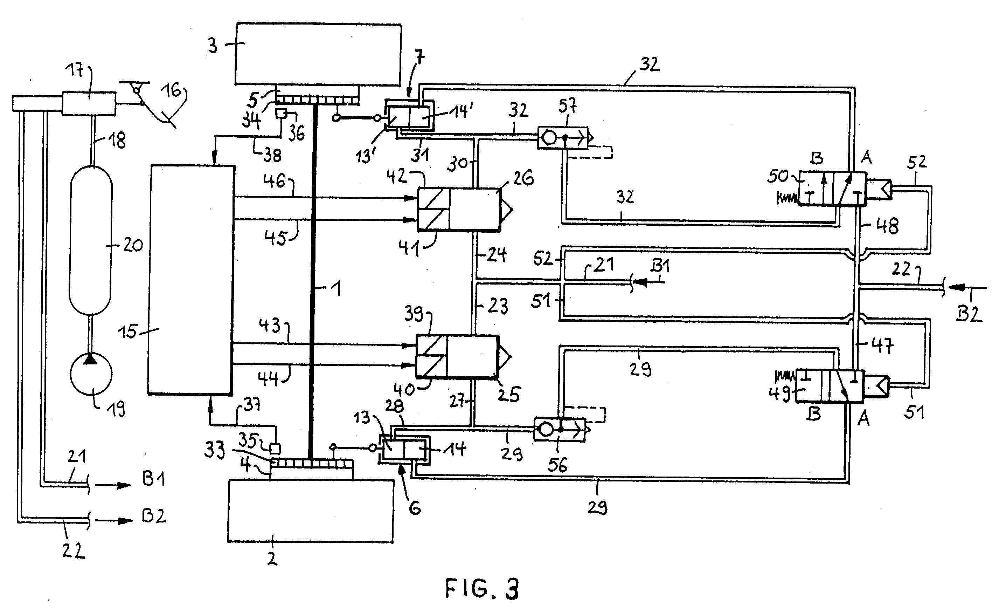

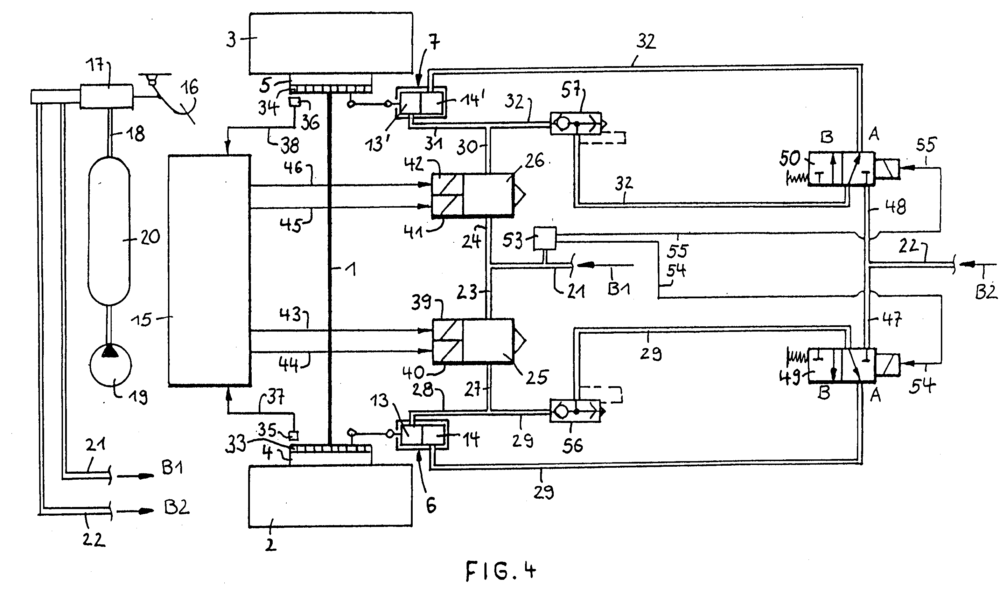

Im Hinblick auf die bisherige Beschreibung der Bremsanlage erfüllen alle vier in der Zeichnung dargestellten Ausführungsbeispiele die gleichen Bedingungen. Nachstehend sind die Unterschiede der einzelnen Ausführungsbeispiele noch näher erläutert. Die Ausführungsbeispiele gemäß Fig. 1 und 2 unterscheiden sich durch eine unterschiedliche Ansteuerung der beiden 3/2-Wege-Umschaltventile 49, 50, die Ausführungsbeispiele gemäß Fig. 3 und 4 unterscheiden sich demgegenüber jeweils durch das zusätzliche Vorsehen von Schnellentlüftungseinrichtungen für die Bremsleitungen 29, 32 bzw. die daran angeschlossenen Druckräume 14, 14' der beiden Doppelkolben-Bremszylinder 6, 7.

Im Fall der Ausführungsbeispiele gemäß Fig. 1 und 3 wird jedes der beiden 3/2-Wege-Umschaltventile 49, 50 pneumatisch über eine von der Druckleitung 21 des ersten Bremskreises B1 abgehende Steuerdruckleitung 51, 52 mit Druckmittel angesteuert. Das heißt, wenn nicht gebremst wird und die Druckleitung 21, damit auch die Steuerdruckleitungen 51, 52 drucklos sind, befinden sich die 3/2-Wege-Umschaltventile 49, 50 in Schaltstellung B. Sobald jedoch das Bremspedal 16 betätigt und damit Druck in die Leitungen 21, 51, 52 gegeben wird, werden die beiden 3/2-Wege-Umschaltventile 49, 50 in Schaltstellung A geschaltet. Nach Beendigung einer Bremsung und einer damit einhergehenden Druckentlastung der Leitungen 21, 51, 52 kehren die beiden 3/2-Wege-Umschaltventile 49, 50 wieder in ihre Schaltstellung B zurück. Letzteres hat zur Folge, daß im Falle eines defekten ersten Bremskreises B1 bei einer Bremspedalbetätigung unmittelbar eine Bremsung der Räder 2, 3 über das aus dem zweiten Bremskreis B2 bereitgestellte Druckmittel erfolgt.

Im Fall der Ausführungsbeispiele gemäß Fig. 2 und 4 sind elektromagnetisch betätigbare 3/2-Wege-Umschaltventile 49, 50 vorgesehen. Als Steuerorgan dient ein an die Druckleitung 21 desersten Bremskreises B1 angeschlossener Druckschalter 53, an dem die Betätigungsorgane der beiden 3/2-Wege-Umschatventile 49, 50 über elektrische Steuerleitungen 54, 55 angeschlossen sind. Wenn nicht gebremst wird, demzufolge die Steuerdruckleitung 21 und der Druckschalter 53 drucklos sind, befinden sich die 3/2-Wege-Umschaltventile 49, 50 in Schaltstellung B. Sobald das Betriebsbremspedal 16 betätigt und damit die Druckleitung 21 und der Druckschalter 53 von letzterer her mit Druck beaufschlagt werden, schaltet der Druckschalter 53 um, mit der Folge, daß auch die beiden 3/2-Wege-Umschaltventile 49, 50 in ihre Schaltstellung A geschaltet werden. Nach Beendigung einer Bremsung und einer damit einhergehenden Druckentlastung der Leitung 21 und des Druckschalters 53 mit Umschaltung des letzteren kehren die beiden 3/2-Wege-Ventile 49, 50 wieder in Schaltstellung B zurück. Somit kann auch bei dieser Lösung im Fall eines defekten ersten Bremskreises B1 bei einer Bremspedalbetätigung unmittelbar eine Bremsung der Räder 2, 3 über das aus dem zweiten Bremskreis B2 bereitgestellte Druckmittel erfolgen.

Im Fall der Ausführungsbeispiele gemäß Fig. 3 und 4 ist außerdem in jede der beiden Bremsleitungen 29, 32 ein Schnellentlüftungsventil 56, 57 eingebaut, das gemäß DIN/ISO-Norm 1219 dann, wenn die Einlaßöffnung druckunbeaufschlagt ist, die Auslaßöffnung freigibt, also der jeweils angeschlossene Druckraum 14 bzw. 14' der beiden Doppelkolben-Bremszylinder 6, 7 in die Atmosphäre entlüftbar ist und eine Verkürzung der Entlüftungszeit des betreffenden Druckraumes 14 bzw. 14' bewirkt.

## Patentansprüche

1. Pneumatische oder hydraulische Zwei-Kreis-Bremsanlage für die Räder (2, 3) einer Achse (1) eines Lastkraftwagens, Omnibusses oder dergleichen Fahrzeugs, mit einer ABS-Regel- und Steuerelektronik (15) zur Ausgabe von Steuerbefehlen an zwei - je Achsseite einen - ABS-Druckmodulatoren (25, 26), die beide in einen ersten Bremskreis (B1) eingeschaltet sind und im Fall einer Bremsung jeweils das zugeführte Druckmittel über abgehende Bremsleitungen (27, 28 bzw. 30, 31) einem Bremszylinder (6, 7) je Achsseite im Sinne einer antiblockiergeschützten Bremsung der beiden Räder (2, 3) zuleiten, dadurch gekennzeichnet, daß die beiden Druckmodulatoren (25, 26) von einer mikroprozessorgesteuerten ABS-Regel- und Steuerelektronik (15) gesteuert werden, und daß die beiden in den ersten Bremskreis (B1) eingeschalteten Druckmodulatoren (25, 26) im Fall einer Bremsung das jeweils zugeführte Druckmittel über abgehende Bremsleitungen (27, 28, 29 bzw. 30, 31, 32) den beiden Druckräumen (13, 14 bzw. 13', 14') eines Doppelkolben-Bremszylinders (6, 7) je Achsseite im Sinne einer antiblockiergeschützten Bremsung der beiden Räder (2, 3) zuleiten, wobei in jede der zum einen Druckraum (14, 14') des linken und rechten Doppelkolben-Bremszylinders (6, 7) führende Bremsleitung (29 bzw. 32) ein 3/2-Wege-Umschaltventil (49, 50) eingebaut ist, die beide im Fall einer Bremsung auf Durchlaß der betreffenden Bremsleitung (29, 32) geschaltet, jedoch bei Ausfall bzw. Störungen des ersten Bremskreises (B1) automatisch auf einen angeschlossenen zweiten Bremskreis (B2) umschaltbar sind, über den das Druckmittel dann druckdosiert den besagten einen Druckräumen (14, 14') der beiden Doppelkolben-Bremszylinder (6, 7) für eine normale, nicht antiblockiergeschützte Bremsung der Räder (2, 3) bereitstellbar ist.

2. Bremsanlage nach Anspruch 1, wobei jedes der beiden 3/2-Wege-Umschaltventile (49, 50) über entsprechende Ansteuerleitungen (51, 52) mit Druckmittel aus dem ersten Bremskreis (B1) umschaltbar ist, sich ferner normalerweise in einer Schaltstellung befindet, in der das Druckmittel vom zweiten Bremskreis (B2) her dem besagten einen Druckraum (14, 14') des betreffenden Doppelkolben-Bremszylinders (6, 7) zuführbar wäre, jedoch im Falle einer Bremsung bei intaktem ersten Bremskreis (B1) von dessen Druckmittel umgeschaltet wird, so daß dann im besagten einen Druckraum (14, 14') beider Doppelkolben-Bremszylinder (6, 7) das Druckmittel aus dem ersten Bremskreis (B1) wirksam wird (Fig. 1 und 3).

3. Bremsanlage nach Anspruch 1, wobei jedes der beiden 3/2-Wege-Umschaltventile (49, 50) elektromagnetisch umschaltbar und über eine Steuerleitung (54, 55) an einem mit der Druckleitung (21) des ersten Bremskreises (B1) in Verbindung stehenden Druckschalter (53) angeschlossen ist, sich ferner normalerweise in einer Schaltstellung befindet, in der das Druckmittel vom zweiten Bremskreis (B2) her dem besagten einen Druckraum (14, 14') des betreffenden Doppelkolben-Bremszylinders (13, 14) zuführbar wäre, jedoch im Fall einer Bremsung bei intaktem erstem Bremskreis (B1) aufgrund einer Betätigung des Druckschalters (53) in eine andere Schaltstellung umgeschaltet wird, so daß dann im besagten einen Druckraum (14, 14') beider Doppelkolben-Bremszylinder (6, 7) das Druckmittel aus dem ersten Bremskreis (B1) wirksam wird (Fig. 2 und 4).

4. Bremsanlage nach Anspruch 1, wobei in jede der beiden zu den besagten einen Druckräumen (14, 14') der Doppelkolben-Bremszylinder (6 7) führende Bremsleitung (29, 32) ein eine Verkürzung der Druckraum-Entlüftungszeit bewirkendes Schnellentlüftungsventil (56, 57) eingebaut ist (Fig. 3 und 4).

5. Bremsanlage nach einem der vorhergehenden Ansprüche, dadurch gekennzeichnet, daß der besagte eine Druckraum (14, 14') im Gehäuse (8) des betreffenden Doppelkolben-Bremszylinders (6, 7) demjenigen Kolben (10) zugeordnet ist, der dem anderen Kolben (9) räumlich vorgeschaltet ist und letzteren bei einer Druckbeaufschlagung des besagten einen Druckraumes (14, 14') mit Druckmittel aus dem zweiten Bremskreis (B2) vor sich herschiebend in Richtung Betätigung des Bremsmechanismus (4, 5) des zugehörigen Rades (2, 3) mitnimmt.

## Claims

1. Pneumatic or hydraulic dual-circuit brake system for the wheels (2, 3) on an axle (1) in a truck, bus or similar vehicle, with an electronic ABS regulating and control system (15) for sending control commands to two ABS pressure modulators (25, 26) -one at each end of the axle-, both of which modulators are switched into a first brake circuit (B1) and, in the event of a braking operation, feed, in the sense of an anti-lock-protected braking action of the two wheels (2, 3), the supplied pressure medium to a brake cylinder (6, 7) at each end of the axle via outgoing brake lines (27, 28 and 30, 31 respectively), characterised in that the two pressure modulators (25, 26) are controlled by an electronic microprocessor-controlled ABS regulating and control system (15) and that, in the event of a braking operation, the two pressure modulators (25, 26) switched into the first brake circuit (B1) feed, via outgoing brake lines (27, 28, 29 and 30, 31, 32 respectively) and in the sense of an anti-lock-protected braking action of the wheels (2, 3), the respectively supplied pressure medium to the two pressure chambers (13, 14 and 13', 14' respectively) of a double piston brake cylinder (6, 7) installed at each end of the axle, a 3/2-way change-over valve (49, 50) being installed in each brake line (29 and 32) leading to the one pressure chamber (14, 14') of the left and the right double piston brake cylinder (6, 7), both of which 3/2-way change-over valves (49, 50) are, in the event of a braking operation, switched to flow in the relevant brake line (29, 32), but, in the event of a failure or malfunctions in the first brake circuit (B1), can automatically be switched to a connected second brake circuit (B2), via which brake circuit the pressure medium can be pressure-metered and supplied to the said pressure chambers (14, 14') of the two double piston brake cylinders (6, 7) for a normal, non-anti-lock-protected braking action of the wheels (2, 3).

2. Brake system as under Claim 1, characterised in that each of the two 3/2-way change-over valves (49, 50) can be switched with the pressure medium from the first brake circuit (B1) via corresponding trigger lines (51, 52), that in addition each of the aforementioned valves (49, 50) is usually in a switching position in which the pressure medium from the second brake circuit (B2) could be supplied to the said one pressure chamber (14, 14') of the relevant double piston brake cylinder (6, 7), but that, in the event of a braking operation, if the first brake circuit (B1) is in order, each of the said valves (49, 50) is switched by the pressure medium of the first brake circuit (B1) so that in the said one pressure chamber (14, 14') of the two double piston brake cylinders (6, 7) the pressure medium from the first brake circuit (B1) becomes effective (Fig 1 and 3).

3. Brake system as under Claim 1, characterised in that each of the two 3/2-way change-over valves (49, 50) can be switched electromagnetically and is, via a control line (54, 55), connected to a pressure switch (53) linked to the pressure line (21) of the first brake circuit (B1) and that in addition each of the said valves (49, 50) is normally in a switching position, in which the pressure medium from the second brake circuit (B2) could be supplied to the said one pressure chamber (14, 14') of the relevant double piston brake cylinder (13, 14), but, in the event of a braking operation, if the first brake circuit (B1) is in order, each of the said valves (49, 50) is, on actuation of the pressure button (53), switched to another switching position so that the pressure medium from the first brake circuit (B1) becomes effective in the said one pressure chamber (14, 14') of both double piston brake cylinders (6, 7) (Fig 2 and 4).

4. Brake system as under Claim 1, characterised in that a rapid bleed valve (56, 57) shortening the pressure chamber bleeding time is installed in each of the two brake lines (29, 32) leading to the said pressure chambers (14, 14') of the double brake cylinders (6, 7) (Fig 3 and 4).

5. Brake system as under one of the foregoing Claims, characterised in that the said one pressure chamber (14, 14') in the housing (8) of the relevant double piston brake cylinder (6, 7) is allocated to that piston (10) which with regard to its position is connected upstream of the other piston (9) and that, if the said one pressure chamber (14, 14') is charged with pressure from the second brake circuit (B2), the piston (10) pushes the piston (9) before it, taking the latter with it in the direction of an actuation of the brake mechanism (4, 5) of the relevant wheel (2, 3).

## Revendications

1. Installation de freinage pneumatique ou hydraulique à double circuit pour les roues (2, 3) d'un essieu (1) d'un camion, d'un autocar ou de véhicules analogues, avec une électronique de régulation ABS et de commande (15) pour délivrer des ordres de commande à deux modulateurs de pression ABS (25, 26) - respectivement un par essieu - qui sont montés dans un premier circuit de freinage (B1) et qui, en cas de freinage, amènent respectivement l'agent sous pression d'alimentation par l'intermédiaire de canalisations de freinage conduisant (27, 28 ou 30, 31) à un cylindre de frein (6, 7) de chaque côté de l'essieu aux fins de réaliser un freinage, protégé par un système d'antiblocage, des deux roues (2, 3), installation de freinage caractérisée en ce que les deux modulateurs de pression (25, 26) sont commandés par une électronique de régulation ABS et de commande (15) commandés par des microprocesseurs et en ce que les deux modulateurs de pression (25, 26) montés dans le premier circuit (B1) conduisent en cas de freinage l'agent sous pression respectivement alimenté par l'intermédiaire de canalisations de freinage (27, 28, 29 ou 30, 31, 32) aux deux chambres de pression (13, 14 ou 13', 14') d'un cylindre de freinage (6, 7) à double piston de chaque côté des essieux aux fins de réaliser un freinage, protégé par un système d'anti-blocage, des deux roues (2, 3), un distributeur d'inversion (49, 50) à 3/2 voies étant monté dans chacune des canalisations de freinage (29 ou 32) conduisant d'une chambre de pression (14, 14') du cylindre de freinage à double piston (6, 7) gauche et droit, les deux distributeurs en cas de freinage étant branchés de façon à laisser passer le fluide sous pression de la canalisation de freinage concernée (29, 32), mais pouvant être toutefois inversés, en cas de panne ou de dérangements du premier circuit de freinage (B1), automatiquement sur un deuxième circuit de freinage (B2) raccordé, au moyen duquel l'agent sous pression est alors disponible sous une pression dosée pour l'une des chambres de pression mentionnées (14, 14') des deux cylindres de freinage à double piston (6, 7) pour permettre d'avoir un freinage normal, non protégé par le système d'antiblocage, des roues (2, 3).

2. Installation de freinage selon la revendication 1, dans laquelle chacune des deux distributeurs d'inversion à 3/2 voies (49, 50) peut être inversé au moyen des canalisations correspondantes de commande (51, 52) par l'agent sous pression à partir du premier circuit de freinage (B1), et se trouve en outre de façon normale dans une position de branchement, dans laquelle l'agent sous pression pourrait arriver à partir du deuxième circuit de freinage (B2) à l'une des chambres de pression mentionnées (14, 14') du cylindre de freinage à double piston (6, 7), toutefois dans le cas d'un freinage, alors que le premier circuit de freinage (B1) est intact, étant inversé par son agent sous pression de telle sorte que l'agent sous pression sortant du premier circuit (B1) de freinage soit opérationnel dans l'une des chambres de pression mentionnées (14, 14').des deux cylindres de freinage à double piston (6, 7) (Figures 1 et 3).

3. Installation de freinage selon la revendication 1, dans laquelle chacun des deux distributeurs d'inversion à 3/2 voies (49, 50) peut être inversé de façon électromagnétique et être raccordé par une canalisation de commande (54, 55) à un interrupteur à pression (53) se trouvant en liaison avec la conduite sous pression (21) du premier circuit de freinage (B1), se trouve en outre d'une manière normale dans une position de branchement, dans laquelle l'agent sous pression pourrait accéder à partir du deuxième circuit de freinage (B2) à l'une des chambres de pression mentionnées (14, 14') du cylindre de frein concerné à double piston (13, 14), est toutefois inversé dans le cas d'un freinage alors que le premier circuit de freinage (B1) est intact et mis, du fait d'un actionnement de l'interrupteur à pression (53), dans une autre position de branchement, de telle sorte qu'alors l'agent sous pression en provenance du premier circuit de freinage (B1) soit opérationnel (figures 2 et 4) dans l'une des chambres de pression mentionnées (14, 14') des deux cylindres de freinage (6, 7) à double piston.

4. Installation de freinage selon la revendication 1, dans laquelle dans chacune des deux canalisations de freinage (29, 32) conduisant à l'une des chambres de pression (14, 14') du cylindre de freinage (6, 7) à double piston, on monte une soupape de mise rapide à l'atmosphère (56, 57) provoquant un raccourcissement du temps de mise à l'atmosphère de la chambre sous pression (figures 3 et 4).

5. Installation de freinage selon l'une des revendications précédentes, caractérisée en ce que l'une des chambres de pression mentionnées (14, 14') dans le boîtier (8) du cylindre de frein (6, 7) à double piston concerné est associé au piston (10), qui est monté dans l'espace en amont de l'autre piston (9) et entraîne ce dernier dans le cas où l'une des chambres de pression mentionnées (14, 14') est sollicitée par l'agent sous pression à partir du deuxième circuit de freinage (B2) en le poussant devant soi dans le sens de l'actionnement du mécanisme de freinage (4, 5) de la roue correspondante (2, 3).
